# EUROPÄISCHE PATENTSCHRIFT

(11) **EP 0 863 492 B1**
(45) Veröffentlichungstag und Bekanntmachung des Hinweises auf die Patenterteilung: **21.05.2008**
(21) Anmeldenummer: 98104011.6
(22) Anmeldetag: 06.03.1998
(51) Int. Cl.: G07F 7/00, G07F 15/00

(54) **System zum bargeldlosen Betrieb von Kassierzähler-Abgabegeräten**
System for cashless operation of prepayment utility metering devices
Système de fonctionnement sans argent liquide de compteurs de consommation à prépaiement

(30) Priorität: 06.03.1997 DE 29704120 U
(43) Veröffentlichungstag der Anmeldung: 09.09.1998
(73) Patentinhaber: Bauer, Franz Hans Peter, 87719 Mindelheim (DE)
(72) Erfinder: Bauer, Franz Hans Peter, 87719 Mindelheim (DE)
(74) Vertreter: Fiener, Josef

(56) Entgegenhaltungen:
- EP-A- 0 402 302
- EP-A- 0 592 335
- EP-A- 0 698 987
- WO-A-96/03830
- US-A- 4 803 632
- US-A- 5 451 755

## Beschreibung

Die Erfindung betrifft ein System zum bargeldlosen Betrieb von Kassierzähler-Abgabegeräten, insbesondere zur gesteuerten Abgabe von elektrischer Energie, Gas, Wasser, Fernwärme und dgl., gemäß den oberbegrifflichen Merkmalen des Anspruches 1.

Derartige Systeme dienen z.B. zur Verteilung von elektrischer Energie an Endverbraucher, wie dies in der DE-U-295 01 116 beschrieben ist. Elektrische Energie (oder ähnliche strömungsfähige Medien wie Gas, Wasser) wird vom EVU oder Netzbetreiber (z. B. Stadtwerke) üblicherweise über einen beglaubigten Elektrizitätszähler (oder allgemein Kassierzähler-Abgabegerät mit einem Meßwerk) an den Endverbraucher verkauft. Bei zahlungsschwachen Kunden oder bei Vorliegen besonderer Gegebenheiten (wie z. B. in einem Waschsalon, Wohnheim, etc.) ist der Einsatz eines sogenannten Vorkasse-Abgabegerätes vorgesehen, bei dem der Kunde zunächst bezahlt und dann erst entsprechend dem entrichteten Betrag Energie (oder strömungsfähiges Medium bzw. sonstige Leistungen) abnehmen kann. Bisher wurde diese "Vorkasse" meist durch Einbau eines Münzzählers beim Kunden vorgenommen. Der Einsatz von Münzzählern hat jedoch vor allem den Nachteil der Aufbruchgefahr, da Bargeld im Gerät vorhanden ist. Zudem erfordert das Leeren der Geldkassette erhebliche Personalkosten.

Weiterhin werden derartige Kassierzähler-Abgabegeräte auch mit einem Chip- oder Magnetkartenleser als Zusatzgerät ausgestattet, welches auf dem Anschlußklemmenblock des Zählers montiert wird und die Energieabgabe nach Einlesen und Überprüfen der auf dem Datenträger gespeicherten Daten freischaltet. Die Energieabgabe endet dabei, wenn der vorausbezahlte Betrag verbraucht ist, der jedoch häufig eine übermäßige Vorauszahlung für den Kunden bedeutet. Die abgegebene Energiemenge wird vom Meßwerk des Kassierzählers ständig gemessen und zur Berechnung des jeweiligen Restguthabens im Zusatzgerät verwendet. Der jeweilige Tarif ist im Datenträger (z. B. Magnetkarte) abgespeichert und wird beim Einlesen der Daten mit in die Auswerteschaltung des Abgabegerätes übertragen. Eine Tarifänderung ist somit nur zum Verkaufszeitpunkt der Chipkarte selbst möglich.

Mit diesem Zusatzgerät ist bereits eine wesentliche Vereinfachung des Vorkasseverfahrens möglich, jedoch ist dabei noch nachteilig, daß der Kunde jede einzelne, betreiberindividuelle Spezialkarte zuvor gegen entsprechende Vorkasse (z.B. 50,- oder 100.- DM) kaufen und bevorraten muß, um eine kontinuierliche Versorgung sicherzustellen. Entsprechendes gilt für die Betreiberseite (EVU, Stadtwerke), die eine teure Chip- oder Magnetkarten-Programmierstation erwerben müssen und einen großen Vorrat an Datenträgern bereithalten sollten. Somit sind die Kosten für ein derartiges Kassierzähler-System insgesamt sehr hoch.

Dokument US-A-5451755 offenbart ein Gerät zu Abgabekontrolle und Berechnung, geeignet etwa zur Abgabe von elektrischer Energie, welches ebenfalls die Möglichkeit bietet, mittels Zahlungsmitteln wie Kreditkarten usw. eine Abgabeabhängige Bezahlung durch den Verbraucher vornehmen zu lassen. Die Einrichtung vieler voneinander unabhängiger Abgabestellen ist ebenfalls vorgesehen.

Dokument EP0402302 offenbart ein Kreditkartensystem, bei welchem eine Vielzahl von POS Geräten durch eine zentrale Einheit gesteuert wird.

Dokument US4803632 beschreibt ein intelligentes Energieabgabesystem, bei dem die Datenübertragung zu einem externen Abgabemeßgerät beschrieben wird.

Es ist daher Aufgabe der Erfindung, ein System zu schaffen, das die genannten Probleme beseitigt und bei vereinfachter Bedienung verringerte Kosten für den Netzbetreiber und den Kunden ermöglicht, sowie eine optimierte Datenübertragung bei einer hohen Anzahl oder weit entfernt lokalisierten Abgabegeräten sicherzustellen.

Diese Aufgabe wird gelöst durch die im Anspruch 1 angegebenen Merkmale.

Durch die an den Abgabegeräten vorgesehene Lesestation für Datenträger, insbes. die universell verwendbare, aufbuchbare Geld-Chipkarte (Pay-Card) wird nicht nur der Bedienkomfort für den Kunden erhöht, da er für eine Vielzahl von unterschiedlichen Abgabegeräten nur noch eine Kartenvariante benötigt, sondern auch der Aufbau der einzelnen Abgabegeräte wesentlich vereinfacht, da derartige Lesestationen als Großserien-Einbauteil relativ kostengünstig erhältlich sind. Insbesondere wird eine verbrauchsgerechte Abbuchung erreicht, also kundenseitig kein Kapital gebunden und betreiberseitig praktisch simultan mit dem Verbrauch aus seinem Abgabegerät die entsprechende Gutschrift getätigt.

Die Auswertung des aktuellen Kontostandes, nämlich die Abbuchung zu Lasten des Kunden und die Gutschrift zugunsten des Netzbetreibers, erfolgt dabei zentral beim Geldinstitut in einem Zentralrechner in Zusammenarbeit mit dem Netzbetreiber, so daß der Aufwand an intelligenter und damit teurer Auswerte-Soft- /Hardware wesentlich reduziert wird. Somit kann die Rechnerleistung gebündelt werden, so daß die jeweiligen Zentralrechner zur Auswertung der Dateneingabe an den den einzelnen Netzbetreibern (EVU, Stadtwerke usw.) zugeordneten Abgabegeräten besser ausgelastet werden können.

Die Übertragung der relevanten Daten aus den Kassierzähler-Abgabegeräten an den Zentralrechner beim Geldinstitut oder ggf. eine Zwischenstation zur Zwischenspeicherung mit darauffolgender Datenübertragung an die Zentrale erfolgt dabei bevorzugt drahtlos, beispielsweise über das Mobilfunknetz. Somit muß in dem jeweiligen Kassierzähler-Abgabegerät nur noch ein einfacher Sender (mit Identifitierung des jeweiligen Netzbetreibers) und bevorzugt auch ein Empfänger eingebaut werden, während ein Auswerterechner für eine Vielzahl von Kassierzähler-Abgabegeräte gemeinsam verwendet werden kann. Die Datenübertragung mit Identifizierung des Abgabegerätes und zugleich des Datenträgers (und somit des Kundenkontos) an den einzelnen Abgabegeräten zu dem Zentralrechner kann jedoch auch über das übliche Telefonnetz, über Stromkabel oder Lichtwellenleiter erfolgen. Dabei ist besonders vorteilhaft, daß bei einem am Zentralrechner des Geldinstitutes bzw. Netzbetreibers verbuchten Guthaben oder Kreditrahmen das entsprechende Vorkasse-Abgabegerät sofort, also simultan mit einer Kreditrahmenänderung ohne Verzögerung freigeschaltet bzw. gesperrt werden kann.

Bevorzugt ist dabei vorgesehen, daß die bidirektionale Datenübertragung codiert in Form mehrstelliger Zeichenfolgen erfolgt, um die Datensicherheit zu gewährleisten. Durch diese bevorzugte Codierung in Art einer Geheimzahl kann auch ein bestimmter Geldbetrag an das jeweilige Kassierzähler-Abgabegerät des Kunden übertragen und somit auch auf eine Geldkarte (Pay-Card) aufgebucht werden. Durch diese Codierung ergibt sich eine sehr hohe Manipulationssicherheit, insbesondere da diese Zeichenfolge vom Netzbetreiber mit relativ einfacher Hardware-Ausstattung sich jeweils ändernd errechnet wird, und zwar nach einer bestimmten, nur dem Netzbetreiber bzw. Geldinstitut als Ausgabebank des jeweiligen Datenträgers bekannten Systematik.

In dieser Codierung als Zeichenfolge gemäß einer vorbestimmten Systematik können auch die Parametrierdaten für das Abgabegerät, nämlich kWh-Preis für Hoch- oder Niedertarifzeiten, Kreditrahmen, Freischaltung, Impulsanpassung an den jeweiligen Kassierzählertyp, Grundgebühren und sonstige Einstelldaten z. B. nach Tageszeit individuell für jedes Abgabegerät enthalten sein. Von besonderem Vorteil ist bei dieser systematischen Codierung, daß unterschiedliche Zeichenfolge auch über eine räumlich getrennt angeordnete Schnittstelle per Funk oder Mobiltelefon zur direkten Ansteuerung des Abgabegerätes eingegeben werden können.

Zudem benötigt der Kunde oder der Netzbetreiber keinen Chipkartenvorrat mehr, sondern kann den Datenträger, insbesondere die Geldkarte (Pay-Card) für eine Vielzahl zugeordneter Abgabegeräte z. B. für die Infrastruktur einer ganzen Stadt benutzen. Der jeweilige Verbrauch ( z.B. Energieentnahme durch den Kunden, Benutzung eines Stadtbusses oder sonstige Dienstleistung einer Kommune als Netzbetreiber) am Abgabegerät wird wieder zu der Zentrale beim Geldinstitut (oder bei besonders vielen Abgabegeräten z. B. stadtteilweise an einen Zwischenrechner oder Daten-Zwischenspeicher) rückgemeldet, so daß dort im Buchhaltungssystem des Geldinstitutes der jeweils aktuelle Guthaben-Stand abgeglichen werden kann, also von dem durch den Datenträger identifizierten Kundenkonto abgebucht und demjenigen durch das jeweils benutzte Abgabegerät identifizierten Netzbetreiber gutgeschrieben werden. Dies kann häufig simultan erfolgen, da die meisten Netzbetreiber (EVUs, Stadtwerke usw.) Konten bei allen Banken im Umkreis führen und der Datenträger des Kunden bei einer dieser Banken registriert ist. Bei Überschreiten eines gewissen Kreditrahmens kann durch Übertragung eines bestimmten Signals das Zähler-Abgabegerät bzw. die Geldkarte des Kunden sofort gesperrt werden.

Weitere bevorzugte Ausführungsformen ergeben sich aus den abhängigen Ansprüchen.

Die Erfindung wird nachfolgend anhand eines Ausführungsbeispieles im Zusammenhang mit den Figuren näher erläutert. Es zeigen:
- Fig. 1: eine schematische Querschnittsdarstellung eines Kassierzähler-Abgabegerätes nach einem bevorzugten Ausführungsbeispiel in Seitenansicht;
- Fig. 2: eine Vorderansicht auf die Frontseite des Kassierzähler-Abgabegerätes; und
- Fig. 3: ein Blockschaltbild des Systems mit mehreren zugeordneten Kassierzähler-Abgabegeräten.

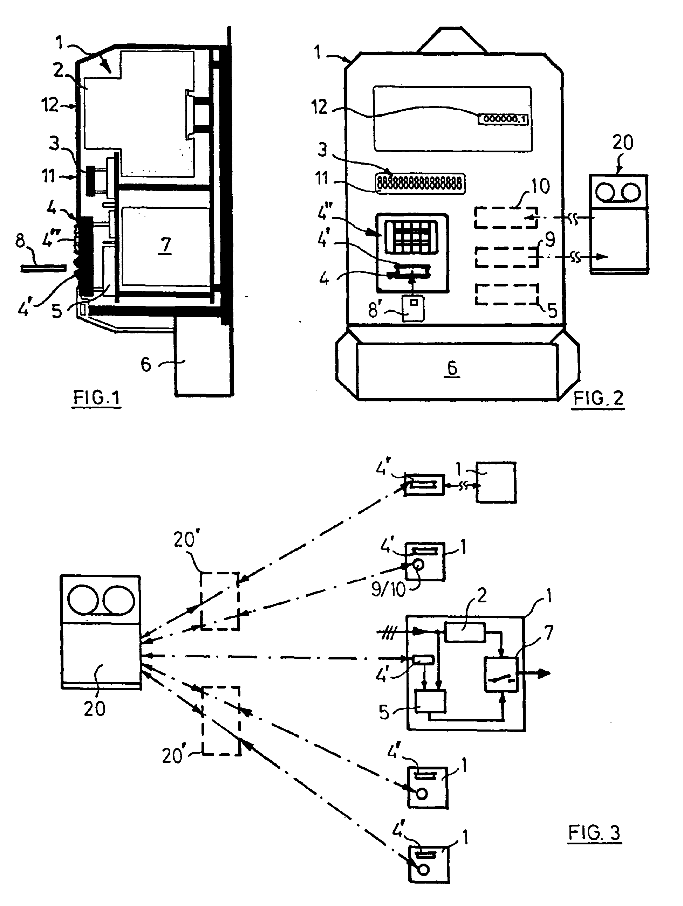

In Fig. 1 ist ein Beispiel eines Kassierzähler-Abgabegerätes 1 mit einem darin untergebrachten Meßwerk 2, einem Leistungsschalter 7, einem Steuerteil 5, einer Datenträger-Eingabeeinrichtung 4 in Form einer Lesestation 4' und einem Anzeigemodul 3 dargestellt. Die nachfolgende Beschreibung bezieht sich auf ein Elektrizitäts-Abgabegerät 1, jedoch ist die System auch auf die gesteuerte Abgabe von Gas, Wasser, Fernwärme oder ähnliche Leistungen/Lieferungen anwendbar. Das Abgabegerät 1 grenzt hier an einen Netz-Anschlußbereich 6 an, wobei dies bei einem Gasnetz natürlich durch entsprechende Anschlußventile gebildet wäre. Ist der Leistungsschalter 7 eingeschaltet, kann am Netzausgang elektrische Energie entnommen werden, die vom Elektrizitäts-Meßwerk 2 gemessen wird. Eine am Netz-Anschlußbereich 6 abgezweigte, nicht dargestellte Spannungsversorgung versorgt die Datenträger-Lesestation 4' und das einfache Steuerteil 5 mit der notwendigen Betriebsspannung.

Die Schaltstellung des Leistungsschalters 7 wird von dem Steuerteil 5 gemäß der Steuerdaten gesteuert, die mittels der Datenträger-Lesestation 4' durch Einschieben eines Datenträgers 8, insbesondere einer aufgebuchten Geldkarte 8' und Wählen z. B. eines Verbrauchswertes oder sonstigen Funktion an einer Tastatur 4'' eingelesen werden. Die Geldkarte 8' kann auch von dem Zentralrechner 20 des Geldinstitutes (vgl. Fig. 3) aus individuell an den einzelnen Abgabegeräten 1 aufgebucht (aufgeladen) werden. Dies erfolgt bevorzugt mittels einer Codierung, die neben dem freizugebenden Geldbetrag auch weitere Parameter, wie persönlicher Überziehungskredit, usw., enthalten kann.

Wesentlich ist hierbei, daß der Kunde bei seinem Geldinstitut in Form eines Datenträgers 8 bzw. seiner persönlichen Geld-Chipkarte (Pay-Card) 8' ein bestimmtes Guthaben bzw. Kreditrahmen (üblicherweise DM 400,-) erhält. Nach Überprüfung des Datenträgers 8 zur Zugangsberechtigung mit Identifizierung des Kundenkontos und des Netzbetreiber-Zielkontos durch den Zentralrechner 20 des Geldinstitutes und Verbuchung wenigstens einer Geldeinheit bzw. eines Geldbetrages vom Kundenkonto zum Zielkonto des Netzbetreibers wird das Abgabegerät 1 des Kunden (oder an dem sich der Kunde gerade befindet) über die Lesestation 4' bzw. das Steuerteil 5 durch eine bestimmte Steuerdaten-Adresse bzw. Frequenz angesteuert, um am so angesprochenen Abgabegerät 1 die entsprechende Freischaltung für die der Geldeinheit entsprechende Leistung vorzunehmen. Es kann (z. B. am Wochenende) auch ein dem jeweiligen Kunden eingeräumter, im Zentralrechner 20 abgespeicherter Kredit aktiviert werden, wobei dieser Überziehungsbetrag von einem späteren Guthaben sofort wieder abgezogen wird, bzw. von dem mit dem Zentralrechner 20 verbundenen Buchhaltungssystem des Geldinstitutes dem Kundenkonto belastet.

Erfolgt die Abgabe nach Zeiteinheit, wird z. B. alle zehn Minuten, durch einen in dem Steuerteil 5 integrierten Sender 9 ein Impuls an den Zentralrechner 20 gesandt und dort der Geldbetrag entsprechend der zwischenzeitlich entnommenen bzw. beanspruchten Leistung vom Kundenkonto abgebucht und dem Konto des Netzbetreibers sofort oder im Minuten-/Stundentakt gebündelt gutgeschrieben. Bei einem solchen Impulsverfahren sind somit an einen Zentralrechner 20 mehrere tausend Abgabegeräte 1 (z.B. auch Parkuhren unterschiedlicher Netzbetreiber, z.B. privater Anbieter) anschließbar und die jeweilige Verbrauchsberechnung z. B. mittels leistungsstarker Betriebssysteme und Multi-Tasking simultan auszuwerten. Da hier im Abgabegerät 1 selbst der tatsächliche Verbrauch und die Guthabenangleichung nicht berechnet wird, sondern im zentralen Auswerterechner 20, kann in diesem Falle auf eine aufwendige Auswerteschaltung im jeweiligen Abgabegerät 1 verzichtet werden.

Mittels eines Empfängers 10 kann jedes einzelne Abgabegerät 1 zudem parametriert (z. B. jeweiliger kWh-Tarif oder Zeittakt umprogrammiert) werden. Von besonderem Vorteil ist, daß der Netzbetreiber das Vorkasse-Abgabegerät 1 per DatenFernübertragung z. B. Mobilfunk oder Modem vollständig sperren oder freischalten kann, sodaß hierdurch auch eine Aufstellung an entlegenen Plätzen z.B. Campingplätzen möglich ist. Hierzu ist bevorzugt ein kombinierter Sender 9/Empfänger 10 (vgl. Fig. 2) am Abgabegerät 1 vorgesehen, mit dem Steuerdaten als verschlüsselte Zeichenfolge gesendet bzw. empfangen werden können. Insbesondere bei der Funkübertragung nach Art des sogenannten Cityrufs oder Scall-Empfangs mit individueller Adresse kann die Freischaltung sofort nach dem vorstehend beschreibenen Abbuchungsvorgang bzw. der überprüften Abbbuchungsgenehmigung vom Kundenkonto an das benutzerspezifische Abgabegerät übermittelt werden.

Dabei ist dieser Sender 9/Empfänger 10 zur bidirektionalen Steuerdatenübertragung ausgebildet, so daß der Netzbetreiber jeweils Daten aus dem jeweiligen Vorkasse-Abgabegerät 1 auslesen kann. Dies erfolgt bevorzugt wiederum drahtlos über Funk oder Mobiltelefon, jedoch kann auch die Lesestation 4' dazu ausgebildet sein, um befugtem Wartungspersonal das Auslesen von Daten über Nutzungsdauer, Nutzungszeit und dergleichen zu ermöglichen.

Wie in der Vorderansicht der Fig. 2 dargestellt, sind das Anzeigemodul 3 und das mit einer Zählanzeige ausgerüstete Elektrizitäts-Meßwerk 2 mittels zweier im Abgabegerät 1 eingelassener Fenster 11 bzw. 12 zu erkennen, so daß daran auch das verbleibende Restguthaben auf der Chipkarte (Pay-Card) 8' durch Abruf angezeigt und ggf. über den Sender 9/Empfänger 10 mit Ankopplung an das Geldinstitut aufgebucht, sowie vom Benutzer kontrolliert werden können.

In Fig. 3 ist ein Blockschaltbild des neuerungsgemäßen System in der Ausführung zur gesteuerten bargeldlosen Abgabe dargestellt. Hierbei sind mehrere Abgabegeräte 1 schematisch als Blöcke eingezeichnet, wovon ein Block zur Verdeutlichung des Aufbaus mit Meßwerk 2, Lesestation 4' bzw. Sender 9/Empfänger 10, Steuerteil 5 und Leistungsschalter 7 vergrößert dargestellt ist. Jedes Abgabegerät 1 weist eine bestimmte Datenadresse oder Sende-/Empfangsfrequenz z. B. 442, 444, 446 MHz etc. auf, um mit dem Zentralrechner 20 adressierbar in Verbindung zu stehen. Wenn eine besonders hohe Anzahl von Abgabegeräten 1, z. B. in einem großen Wohngebäude oder einem Stadtteil aufgestellt ist, kann es zweckmäßig sein, in die Datenübertragungsverbindung einen Zwischenspeicher 20' zwischenzuschalten. Dies ist auch sinnvoll bei besonders großen Übertragungswegen. Solche Zwischenspeicher 20' können z. B. an Sendestationen für das D1- oder D2-Netz oder Telefon-Verbindungsknoten vorgesehen sein, so daß eine flächendeckende Datenübertragung zwischen dem Zentralrechner 20 des jeweiligen kundenkontoführenden Geldinstituts und der Vielzahl von Abgabegeräten 1 sichergestellt ist. Dabei ist auch eine Kombination verschiedener Datenübertragungswege möglich, beispielsweise zwischen der Vielzahl der Abgabegeräte 1 und den einzelnen Zwischenspeichern 20' per Mobilfunk und zwischen Zentralrechner 20 und letzteren per Daten-Standleitung oder ISDN-Leitung.

Insgesamt ergibt sich somit ein System zum bargeldlosen Betrieb einer Vielzahl von Kassierzähler-Abgabegeräten 1 mit einfachem Aufbau und einfacher Bedienung sowie hoher Sicherheit vor Fehlbedienung und Manipulationen, wobei eine zeitgerechte, leistungsproportionale Abbuchung vom Kundenkonto zugleich mit der Leistungsentnahme und eine im wesentlichen zeitgleiche Gutschrift auf das Netzbetreiberkonto erfolgt. Es sei darauf hingewiesen, daß die Datenträger-Lesestation 4', das Steuerteil 5 und ggf. das Anzeigemodul 3 sowie der Sender 9/Empfänger 10 auch als gesondertes Gerät von den elektrischen Meß- und Schalt-Bauteilen 2 und 7 getrennt in einem separaten Gehäuse untergebracht sein können. Diese "verteilte" Ausführung eignet sich insbesondere für die Nachrüstung von bestehenden Kassierzähler-Abgabegeräten 1, an die die neuerungsgemäße Vorrichtung dann angekoppelt werden kann, z. B. als Huckepack- oder Anflanschgerät.

So kann auch die Lesestation 4' in der Wohnung des Kunden getrennt vom Abgabegerät 1 (z. B. im Keller oder Dachboden) angeordnet werden, wobei die Lesestation 4' - wie in Fig. 3, oben dargestellt - zum Zentralrechner 20 hin, z. B. durch eine Mobiltelefon-Datenübertragungsstrecke verbunden sein kann und die empfangenen Steuerdaten an das Steuerteil 5 im Abgabegerät 1 weiterleitet. Hierzu reicht z. B. ein einfacher, z. B. aus Garagentorantrieben bekannter Funk-Sender aus, da die Entfernung zwischen Wohnung und Keller im allgemeinen nur ca. 10-30m (Luftlinie) beträgt. Somit ist die Leistungsabgabe durch den Kunden auch fernbedienbar, sofern die sonstigen Voraussetzungen vorliegen, nämlich Freigabe und Aktivierung durch die in Fig. 3 strichpunktiert dargestellte Steuerdaten-Übertragung vom Zentralrechner 20 bzw. Zwischenspeicher 20' an das jeweilige, individuelle Abgabegerät 1 mit simultaner Abbuchung von dem Datenträger 8, insbesondere in der Ausführung als eine vom Geldinstitut bereitgestellten Kunden-Geldkarte (Pay-Card) 8'.

## Patentansprüche

1. System zum bargeldlosen Betrieb von Kassierzähler-Abgabegeräten (1) zur gesteuerten Abgabe von elektrischer Energie, Gas, Wasser, Fernwärme und dgl. von einem Netzbetreiber an einen Kunden, umfassend ein Abgabe-Meßwerk (2), eine Datenträger-Eingabeeinrichtung (4), einen Leistungsschalter (7) und ein Steuerteil (5) zur Steuerung des Leistungsschalters (7) gemäß der an der Datenträger-Eingabeeinrichtung (4) eingegebenen Steuerdaten, wobei die Datenträger-Eingabeeinrichtung (4) als Lesestation (4') für einen Datenträger (8) zur Einlesung von wenigstens einer Geldeinheit entsprechenden Steuerdaten ausgebildet ist und das Kassierzähler-Abgabegerät (1) mit einem Zentralrechner (20) eines Geldinstitutes zur Abbuchung der Geldeinheit(-en) vom Kundenkonto zugunsten eines Kontos des Netzbetreibers gekoppelt ist,
**dadurch gekennzeichnet, daß**
für eine Vielzahl von Kassierzähler-Abgabegeräten (1) mehrere Zwischenspeicher (20') vorgesehen sind, die mit dem Zentralrechner (20) beim Geldinstitut bzw. Netzbetreiber verbunden sind.

2. System nach Anspruch 1,
**dadurch gekennzeichnet, daß**
die Übertragung der Steuerdaten mit einem Sender (9) und Empfänger (10) am jeweiligen Kassierzähler-Abgabegerät (1) bidirektional ausgebildet ist.

3. System nach Anspruch 1 oder 2,
**dadurch gekennzeichnet, daß**
die übertragenen Steuerdaten mittels einer mehrstelligen Schlüsselzahl codiert sind.

4. System nach einem der Ansprüche 1 bis 3,
**dadurch gekennzeichnet, daß**
die Datenträger-Lesestation (4') als Kartenleseschlitz ausgebildet ist.

5. System nach einem der Ansprüche 1 bis 4,
**dadurch gekennzeichnet, daß**
der Datenträger (8) als Chipkarte (Pay-Card) (8') mit Auf- und Abbuchungsfunktion für Geldeinheiten ausgebildet ist.

6. System nach einem der Ansprüche 1 bis 5,
**dadurch gekennzeichnet, daß**
das Steuerteil (5) zur Überprüfung der von der Lesestation (4') eingelesenen oder vom Empfänger (10) empfangenen Steuerdaten wenigstens ein abgespeichertes Prüfkriterium aufweist.

7. System nach einem der Ansprüche 1 bis 6,
**dadurch gekennzeichnet, daß**
die Lesestation (4') vom Kassierzähler-Abgabegerät (1) räumlich getrennt angeordnet und mit diesem durch eine Datenübertragungsstrecke verbunden ist.

8. System nach einem der Ansprüche 1 bis 7,
**dadurch gekennzeichnet, daß**
die Lesestation (4') und/oder das Steuerteil (5) mit einem Sender (9) zum Senden/Empfangen von Codierungen, insbesondere per Funk, Telefon, Infrarot, Lichtleiter oder Ultraschall gekoppelt ist/sind.

## Claims

1. A system for cashless operation of prepayment utility metering devices (1) for the controlled supply of electrical power, gas, water, district heat, and the like from a network carrier to a customer, comprising a supply measuring means (2), a data carrier input means (4), a power switch (7), and a control unit (5) for controlling the power switch (7) according to the control data entered at the data carrier input means (4), wherein the data carrier input means (4) is implemented as a read station (4') for a data carrier (8) to read in control data corresponding to at least one monetary unit, and the prepayment utility metering device (1) is coupled with a central processor (20) of a financial institution to directly debit the monetary unit(s) from the customer account in favour of an account of the network carrier,
**characterized in that**
for a plurality of prepayment utility metering devices (1) there are provided several intermediate memories (20') which are connected with the central processor (20) in the financial institution and the network carrier's utility, respectively.

2. The system according to claim 1, **characterized in that** the communication of the control data with a transmitter (9) and a receiver (10) at the respective prepayment utility metering device (1) is of the bidirectional type.

3. The system according to claim 1 or 2, **characterized in that** the communicated control data is coded by means of a key number having more than one digit.

4. The system according to any of claims 1 to 3, **characterized in that** the data carrier read station (4') is designed as a card reading slot.

5. The system according to any of claims 1 to 4, **characterized in that** the data carrier (8) is designed as a smart card (pay-card) (8') having credit and debit functions for monetary units.

6. The system according to any of claims 1 to 5, **characterized in that** the control unit (5) includes at least one stored checking criterion to review the control data read in by the read station (4') or received from the receiver (10).

7. The system according to any of claims 1 to 6, **characterized in that** the read station (4') is located in spatial separation from the prepayment utility metering device (1) and is connected therewith by a data transmission circuit.

8. The system according to any of claims 1 to 7, **characterized in that** the read station (4') and/or the control unit (5) is/are coupled with a transmitter (9) for sending/receiving codings, in particular by radio, telephone, infrared, photoconductor, or ultrasonics.

## Revendications

1. Système de fonctionnement sans argent liquide de compteurs de consommation à prépaiement (1) servant à la distribution commandée d'énergie électrique, de gaz, d'eau, de chauffage urbain et similaire par un exploitant de réseau à un client comprenant un dispositif de mesure de distribution (2), un dispositif d'insertion du support de données (4), un disjoncteur (7) et un élément de commande (5) servant à commander le disjoncteur (7) selon les données de commande entrées au niveau du dispositif d'insertion du support de données (4), le dispositif d'insertion du support de données (4) étant réalisé sous forme de station de lecture (4') pour un support de données (8) permettant de lire des données de commande correspondant à au moins une unité monétaire et le compteur de consommation à prépaiement (1) étant couplé à un ordinateur central (20) d'un établissement financier servant à débiter la/les unité(s) monétaire(s) du compte client au profit d'un compte de l'exploitant de réseau,
**caractérisé en ce que**
pour une pluralité de compteurs de consommation à prépaiement (1), plusieurs mémoires tampons (20') sont prévues, qui sont reliées à l'ordinateur central (20) de l'établissement financier et/ou de l'exploitant de réseau.

2. Système selon la revendication 1,
**caractérisé en ce que**
la transmission des données de commande est réalisée de manière bidirectionnelle avec un émetteur (9) et un récepteur (10) au niveau du compteur de consommation à prépaiement (1) respectif.

3. Système selon la revendication 1 ou 2,
**caractérisé en ce que**
les données de commande transmises sont codées au moyen d'un code à plusieurs chiffres.

4. Système selon l'une quelconque des revendications 1 à 3,
**caractérisé en ce que**
la station de lecture de supports de données (4') est réalisée sous forme de fente de lecteur de cartes.

5. Système selon l'une quelconque des revendications 1 à 4,
**caractérisé en ce que**
le support de données (8) est réalisé sous forme de carte à puce (carte de paiement) (8') avec fonction de crédit et de débit pour les unités monétaires.

6. Système selon l'une quelconque des revendications 1 à 5,
**caractérisé en ce que**
l'élément de commande (5) permettant de contrôler les données de commande lues par la station de lecture (4') ou reçues par le récepteur (10) présente au moins un critère de contrôle enregistré.

7. Système selon l'une quelconque des revendications 1 à 6,
**caractérisé en ce que**
la station de lecture (4') est séparée spatialement du compteur de consommation à prépaiement (1) et est reliée à celui-ci par une liaison de transmission de données.

8. Système selon l'une quelconque des revendications 1 à 7,
**caractérisé en ce que**
la station de lecture (4') et/ou l'élément de commande (5) est couplé/sont couplés à un émetteur (9) servant à émettre/recevoir des codes, en particulier par radio, téléphone, infrarouge, fibre optique ou ultrason.
